# EUROPÄISCHE PATENTANMELDUNG

(11) **EP 3 871 873 A1**
(43) Veröffentlichungstag der Anmeldung: **01.09.2021**
(21) Anmeldenummer: 20159569.1
(22) Anmeldetag: 26.02.2020
(51) Int. Cl.: B32B 1/08, B32B 3/26, B32B 3/28, B32B 3/30, B32B 5/18, B32B 5/20, B32B 7/022, B32B 7/027, B32B 7/12, B32B 15/08, B32B 15/095, B32B 15/18, B32B 15/20

(54) **THERMISCH GEDÄMMTES ROHR**

(71) Anmelder: Brugg Rohr AG Holding, 5200 Brugg (CH)
(72) Erfinder: Kress, Jürgen, 8966 Oberwil-Lieli (CH)
(74) Vertreter: Grimm, Siegfried

(57) **Zusammenfassung**

Die vorliegende Erfindung betrifft thermisch gedämmte Leitungsrohre umfassend Wärmedämmung, Aussenmantel und Mediumrohre wobei die Wärmedämmung einen Schaumstoff mit einer Dichte von 30-80kg/m3 aufweist, der Aussenmantel einen thermoplastischen Kunststoff (21) umfasst, welcher ein Modul von 300-1400 MPa aufweist und eine Wellenform besitzt. Die Erfindung betrifft ferner die Verwendung sowie die Herstellung solcher Rohre. Des Weiteren betrifft die Erfindung Verbundmaterialien, deren Verwendung zur thermischen Isolation, sowie deren Herstellung.

## Beschreibung

Die Erfindung betrifft thermisch gedämmte Rohre mit spezifischer Wärmedämmung und spezifischem Aussenmantel, deren Verwendung sowie deren Herstellung. Ferner betrifft die Erfindung Verbundmaterialien, deren Verwendung zur thermischen Isolation, sowie deren Herstellung.

Thermisch gedämmte Rohre sind bekannt und kommen in vielen Bereichen zur Anwendung, insbesondere zur Bereitstellung von Fernwärme, Nahwärme und Kühlung, sowohl in der Industrie als auch im Haushalt. Solche thermisch gedämmten Rohre (1) umfassen wenigstens ein mediumführendes Mediumrohr (4), eine umgebende thermische Dämmung (3) und einem Aussenmantel (2). Geeignete Mediumrohre (4) bestehen aus Metall oder Kunststoff, die Dämmung (3) aus einem oder mehreren Dämmstoffen, der Aussenmantel (2) aus Kunststoff oder Metall.

Es gibt zahlreiche Herstellverfahren für solche gedämmten Rohre, beispielhaft erwähnt seien kontinuierlich arbeitende Verfahren gemäss EP0897788, WO2019/214954 und WO2008/142211. Diese Verfahren sind geeignet zur Herstellung von Rohren beliebiger Länge ("endlose Rohre"). Die so hergestellten thermisch gedämmten Rohre können unmittelbar nach der Produktion entweder auf einer Trommel aufgewickelt und anschliessend in Ringe der gewünschten Länge konfektioniert werden oder in Stangen der gewünschten Länge direkt abgelängt werden.

Bei den am Markt befindlichen Rohren dominieren solche mit Dämmstoffen auf der Basis von Polyurethan (PUR) oder Polyisocyanurat (PIR) oder auf der Basis von thermoplastischen Schäumen.
Die PUR- bzw. PIR-Schäume werden während des Produktionsverfahrens aus einem flüssigen Zweikomponentengemisch ("2K-Gemisch") gebildet, welches seinerseits aus Polyolen und Isocyanaten in einem festgelegten Mischungsverhältnis besteht. Dieses 2K-Gemisch vernetzt während des Herstellungsprozesses und deshalb resultiert eine gute Haftung zum Mediumrohr (4) (Kraftschluss) und - in Abhängigkeit von dem gewählten Herstellungsverfahren - auch zu dem Aussenmantel (2). Solche Rohrsysteme sind sogenannte Verbundsysteme und unterliegen für Fern-und Nahwärmeanwendungen den Normen EN 15632-1:2009+A1:2014 (E) und EN 15632-2:2010+A1:2014.
Rohre mit Dämmstoffen auf der Basis von thermoplastischen Schäumen verwenden typischerweise vorgefertigte Matten aus dem entsprechenden Thermoplast, z. B. Polyethylen (PE). Die damit versehenen Mediumrohre sind auf der Aussenseite mit einem Mantel aus PE umgeben, der entweder direkt durch Extrusion aufgebracht wird oder ebenfalls vorgefertigt ist. Es ist normalerweise kein kraftschlüssiger Verbund zu den Mediumrohren und zu dem Aussenmantel gegeben. Solche Rohrsysteme sind sogenannte Nicht-Verbundsysteme und unterliegen für Fern-und Nahwärmeanwendungen den Normen EN 15632-1:2009+A1:2014 (E) und EN 15632-3:2010+A1:2014. Verbundsysteme sind in der thermischen Dämmung vergleichbaren Nicht-Verbundsystemen typischerweise überlegen; insbesondere da sie längswasserdicht sind. Nicht-Verbundsysteme haben bei vergleichbaren Aussendurchmessern jedoch den Vorteil der leichtern Biegbarkeit.

Schliesslich ist bekannt, dass Rohre mit einem sogenannten korrugierten Mantel leichter gebogen werden können, d. h. die Biegekräfte sind geringer. Dies erweist sich bei der Verlegung der Rohre als vorteilhaft. Die Herstellung solcher Rohre ist bspw. in CH714968 beschrieben.

Es besteht ein allgemeiner Bedarf an alternativen, insbesondere verbesserten, thermisch gedämmten Rohren. So zeigt es sich, dass Isolationswerte, welche unter den o.g. Prüfbedingungen erzielt werden, in der Praxis oftmals nicht vollständig realisieren lassen. Ferner ist es wünschenswert, thermisch gedämmte Rohre zur Verfügung zu stellen, welche einen kleinen Biegeradius ermöglichen und die o.g. Normen erfüllen. Ferner ist es wünschenswert, thermisch gedämmte Rohre zur Verfügung zu stellen, deren Aussendurchmesser gering ist und die die o.g. Normen erfüllen.

Aufgabe der Erfindung ist es daher, ein thermisch gedämmtes Rohr bereit zu stellen, welches eines oder mehrere der o.g. Nachteile löst.

Die vorstehend umrissenen Aufgaben werden gemäss den unabhängigen Ansprüchen gelöst. Die abhängigen Ansprüche stellen vorteilhafte Ausführungsformen dar. Weitere vorteilhafte Ausführungsformen sind der Beschreibung und den Figuren zu entnehmen. Die im Zusammenhang mit der vorliegenden Erfindung gegebenen allgemeinen, bevorzugten und besonders bevorzugten Ausführungsformen, Bereiche usw. können beliebig miteinander kombiniert werden. Ebenso können einzelne Definitionen, Ausführungsformen usw. entfallen bzw. nicht relevant sein.

Die vorliegende Erfindung wird nachstehend detailliert beschrieben. Dabei betrifft die Erfindung
- in einem ersten Aspekt thermisch gedämmte Leitungsrohre und deren Verwendung;
- in einem zweiten Aspekt deren Herstellung;
- in einem dritten Aspekt Verbundmaterialien und deren Verwendung einschliesslich der Verwendung in den Leitungsrohren gemäss erstem Aspekt der Erfindung; und
- in einem vierten Aspekt die Herstellung solcher Verbundmaterialien.
Es versteht sich, dass die verschiedenen nachstehend offenbarten und beschriebenen Ausführungsformen, Bevorzugungen und Bereiche beliebig miteinander kombiniert werden können. Insbesondere sind die Ausführungsformen des ersten Aspekts auf den dritten Aspekt der Erfindung übertragbar. Ausserdem können, in Abhängigkeit von der Ausführungsform, einzelne Definitionen, Bevorzugungen und Bereiche nicht zur Anwendung kommen. Ferner schliesst der Begriff "umfassend" die Bedeutungen "enthaltend" und "bestehend aus" ein. Die in der vorliegenden Erfindung verwendeten Begriffe werden im allgemein üblichen, dem Fachmann geläufigen Sinn verwendet.

Die vorliegende Erfindung wird weiterhin durch die **Figuren** illustriert. Dabei bedeuten, sowohl in den Figuren wie auch in Beschreibung und Ansprüchen:
(1) Thermisch gedämmtes Leitungsrohr
(2) Aussenmantel
(21) thermoplastischen Kunststoff
(22) Wellenform des Aussenmantels
(3) Wärmedämmung
(31) Schaumstoff, bevorzugt zu mind. 60% geschlossenzellig
(4) Mediumrohr
(5) Folie
(6) Verbundmaterial

Fig.1A zeigt den Aufbau zur Herstellung der erfindungsgemässen Rohre gemäss Bsp. 2. Es bedeuten:
   (A) Flansch; (B) Formbacke, (F) Innenrohr; sowie
   (C) korrugierter Aussenmantel(2)
   (D) Wärmedämmung (3) mit Folie (5)
   (E) Mediumrohr (4), wobei (C), (D) und (E) zusammen das erfindungsgemässe Leitungsrohr (1) bilden.
Fig.1B und 1C zeigen zwei Ausgestaltungen des erfindungsgemässen Leitungsrohrs (1), einmal mit einem Mediumrohr und ohne Folie, einmal mit zwei Mediumrohren und einer Folie. Fig.1D zeigt eine Ausgestaltung des erfindungsgemässen Verbundmaterials (6)
Fig.2 zeigt den Versuchsaufbau für Bsp. #3, Messung der Auslenkkräfte.
Fig.3 erläutert die Struktur des korrugierten Mantels und der verwendeten Bezeichnungen (nicht massstäblich): Die Wellenlänge W, die Stegbreite B, Die Steghöhe H, die Wanddicke s in Abhängigkeit vom Aussendurchmesser D. Dabei ist oben die korrugierte Struktur, unten die sinusförmige Struktur angegeben.
Fig.4: Graphische Auftragung der Auslenkkraft (y-Achse in N) gegen das Metergewicht des korrugierten Mantels (x-Achse in g/m) für thermisch gedämmte Rohre mit einem Mantel aus LLDPE und mit den beiden getesteten Polyurethanschäumen «hart» und «weich» bei Backenform 1.
Fig.5: Graphische Auftragung der Auslenkkraft (y-Achse in N) gegen das Metergewicht des korrugierten Mantels (x-Achse in g/m) für thermisch gedämmte Rohre mit dem Polyuethanschaum «weich» und mit den beiden Mantelmaterialien aus HDPE und LLDPE bei Backenform 1.
Fig.6: Graphische Auftragung der Auslenkkraft (y-Achse in N) gegen das Metergewicht (x-Achse in g/m) für thermisch gedämmte Rohre mit dem Polyurethanschaum «weich» (Dreiecke) und "hart" (Quadrate) für das Mantelmaterial LLDPE und der Backenform 2
Fig.7: Darstellung der Geometrien von korrugierten Leitungsrohren, hergestellt mit Backenform 1 (links) und Backenform 2 (rechts).

In einem **ersten Aspekt** betrifft die Erfindung somit ein thermisch gedämmtes Leitungsrohr (1), umfassend mindestens ein Mediumrohr (4), mindestens eine um das Mediumrohr herum angeordnete Wärmedämmung (3) und mindestens einen um die Wärmedämmung herum angeordneten Aussenmantel (2), dadurch gekennzeichnet, dass besagte Wärmedämmung (3) einen Schaumstoff (31) umfasst welcher eine Dichte von 30 - 80 kg/m³ gemäss ISO 845:2006 aufweist, bevorzugt ein Modul von 10 - 30 MPa gemäss DIN EN ISO 527-4:1997-07 aufweist, bevorzugt eine Druckfestigkeit von 0.1-0.3 MPa gemäss ISO 844:2014 bei 10% Stauchung aufweist; und besagter Aussenmantel (2) einen thermoplastischen Kunststoff (21) umfasst, welcher eine Wellenform (22) aufweist, insbesondere eine korrugierte Struktur aufweist, sowie ein Modul von 300 - 1400 MPa gemäss DIN EN ISO 527-4:1997-07 aufweist. Bevorzugt ist der Schaumstoff (31) ein Schaumstoff, der zu mindestens 60 % geschlossenzellig ist, bevorzugt zu mindestens 65 %, meist bevorzugt zu mindestens 75 %, gemäss ISO 4590, Third Edition, 2016-07-15.

Die erfindungsgemässen thermisch gedämmten Rohre weisen somit eine spezifische Kombination von mechanischen, strukturellen und chemischen Parametern auf. Aufgrund der Kombination dieser Merkmale verbinden die erfinderischen Leitungsrohre die Vorteile der bekannten offenzelligen PEgedämmten Leitungsrohre mit den Vorteilen der bekannten geschlossenzelligen PU-gedämmten Leitungsrohre. Wie nachfolgend dargelegt, ergänzen sich die Materialeigenschaften der thermischen Dämmung (3) und des Aussenmantels (2) und die Mantelgeometrie des Aussenmantels sinnvoll innerhalb der hier definierten Bereiche. Dadurch kann das erfindungsgemässe Leitungsrohr gleichzeitig die Anforderungen an die Stabilität, Flexibilität und thermische Isolation erfüllen. Dieser Aspekt der Erfindung soll nachstehend näher erläutert werden.

**Leitungsrohr (1):** Thermisch gedämmte Leitungsrohre sind an sich bekannt. Wie bereits erwähnt umfassen diese zumindest ein Mediumrohr (4), mindestens eine um das Mediumrohr herum angeordnete Wärmedämmung (3) und mindestens einen um die Wärmedämmung herum angeordneten Aussenmantel (2).

In einer Ausgestaltung der Erfindung bilden Mediumrohr (4) und Wärmedämmung (3) einen Verbund. In einer weiteren Ausgestaltung der Erfindung bilden Aussenmantel (2) und Wärmedämmung (3) einen Verbund. In einer weiteren Ausgestaltung der Erfindung bilden Aussenmantel (2) und Wärmedämmung (3) und Mediumrohr (4) einen Verbund. Unter Verbundbildung ist der kraftschlüssige Kontakt zwischen den genannten strukturellen Elementen zu verstehen. Dieser kann bspw. durch Verschmelzen oder Verkleben erzeugt werden.

In einer Ausgestaltung der Erfindung ist zwischen Aussenmantel (2) und Wärmedämmung (3) einen Folie (5) angeordnet. Eine derartige Folie kann aufgrund des Herstellungsverfahrens vorliegen.

In einer Ausgestaltung der Erfindung weist das Leitungsrohr beim Auslenktest gemäss den Beispielen für LLDPE besonders gute Werte auf; ebenso für weiche Polyurethane als Wärmedämmung. Diese beiden Parameter wirken synergistisch miteinander, so dass erfindungsgemässe Rohre (1) welche einen weichen Schaum (31) als Wärmedämmung und LLDPE als Polymer (21) des Mantels besonders bevorzugt sind. Dies wird nachstehend und in den Beispielen noch näher erläutert.

In einer Ausgestaltung der Erfindung weist das Leitungsrohr bei der Ringsteifigkeit gemäss SN EN ISO 9969, 2016-05, Werte von mindestens 4 kN/m² auf, bevorzugt mindestens 10 kN/m², meist bevorzugt 15 kN/m² auf. Dieser Parameter ist geeignet zur Charakterisierung der Leitungsrohr-Stabilität. Für viele Anwendungen der hier beschriebenen thermisch gedämmten Leitungsrohre spielt die Ringsteifigkeit eine wichtige Rolle. Dabei werden hohe Werte als vorteilhaft angesehen. Wäre die Ringsteifigkeit zu niedrig, würde das Leitungsrohr bspw. unter der Last des Erdreichs kollabieren.
Korrugierte / gewellte Rohre, welche keinen Schaum und kein Mediumrohr enthalten (z. B. Abwasserrohre), zeigen typische Werte von 2 - 4 kN/m², gemäss der DIN 4262-1:2009-10. Solche kommerziell erhältlichen Rohre bestehen typischerweise aus HDPE. HDPE hat ein verhältnismässig hohes Modul und wird verwendet, um die geforderten Ringsteifigkeiten zu erreichen. Ein Material wie LLDPE oder LDPE käme hier wegen deren niedrigeren Moduln nicht in die Auswahl.
Es wurde überraschend gefunden, dass die erfindungsgemässen Rohre Ringsteifigkeiten von über 10 kNm², häufig über 40 kN/m² aufweisen, gemessen gemäss der ISO 9967 2016. Solche Werte konnten auch realisiert werden für thermoplastische Polymere (21) aus der Gruppe umfassend LDPE und LLDPE, insbesondere LLDPE. Wie vorstehend erwähnt, ist dies gegen die Intuition des Fachmanns, da auch ein solches Material mit einem niedrigen Modul zu Leitungsrohren mit hoher Ringsteifigkeit führt. Für flexible Leitungsrohre ist aber LDPE und insbesondere LLDPE bevorzugt, wegen der dann geringeren Biegekräfte. Es gelingt also, Leitungsrohre zur Verfügung zu stellen die gegensätzliche Parameter vereinigen, nämlich die gewünschten niedrigen Biegekräfte und die gewünschte hohe Ringsteifigkeit. Die Erfindung betrifft somit auch Leitungsrohre wie hier beschrieben, bei denen das thermoplastische Polymer ausgewählt ist aus der Gruppe umfassend LDPE und LLDPE, insbesondere LLDPE und die Ringsteifigkeit Werte von über 10 kNm², bevorzugt über 15 kN/m² aufweist.

In einer Ausgestaltung der Erfindung erfüllt das Leitungsrohr die Anforderung der EN 15632-2:2010+A1:2014 hinsichtlich der Längswasserdichtigkeit.

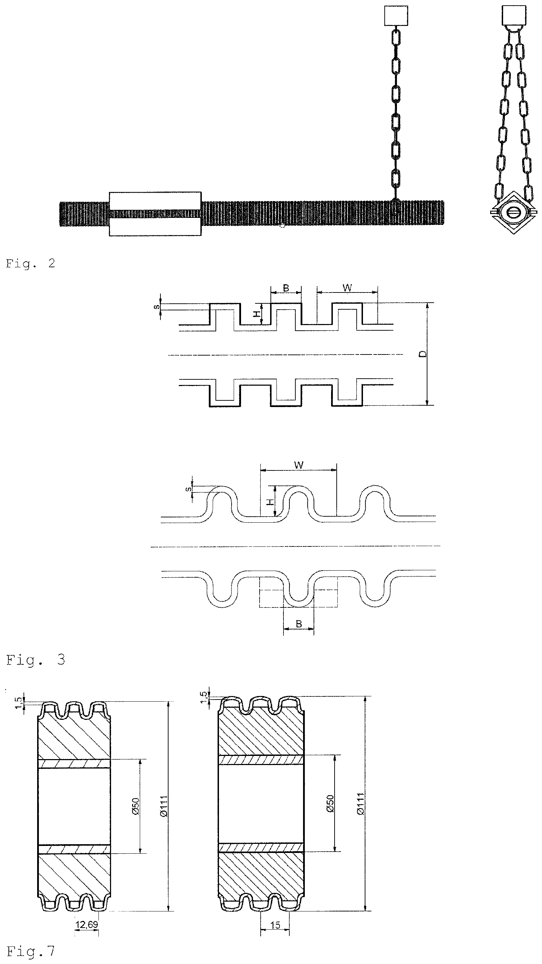

In einer Ausgestaltung der Erfindung weist das Leitungsrohr eine vorteilhafte Mantelgeometrie auf. Demgemäss weisen erfindungsgemässe Leitungsrohre aussenseitig Stege und Täler auf, die sich quer zu einer Longitudinalachse des Rohrs über einen gesamten Rohrumfang erstrecken und sich in Richtung der Longitudinalachse abwechseln, wobei das Rohr einen Aussendurchmesser D zwischen zwei gegenüberliegenden, höchsten Punkten eines Stegs hat. Sofern die höchsten Punkte eines Steges eine Linie bilden, wird die entsprechende Mantelgeometrie als sinusförmig bezeichnet. Wenn die höchsten Punkte eines Steges eine Fläche bilden, wird die entsprechende Mantelgeometrie als korrugiert bezeichnet. Dies ist in Fig. 3 schematisch dargestellt. Entsprechend ist der gewellte (korrugierte Fig.3 oben oder sinusförmige Fig.3 unten) Aussenmantel charakterisiert durch die Wellenlänge W, die Höhe der Stege H, die Breite der Stege B. Diese Parameter sind abhängig vom Aussendurchmesser D und an diesen angepasst. In Abhängigkeit vom Aussendurchmesser D ergeben sich folgende bevorzugte Geometrien für den korrugierten Mantel, dabei ist jeweils der allgemeine, bevorzugte und besonders bevorzugte Parameterbereich angegeben; die Parameter D, W, B und H sowie s sind der Fig.3 zu entnehmen:

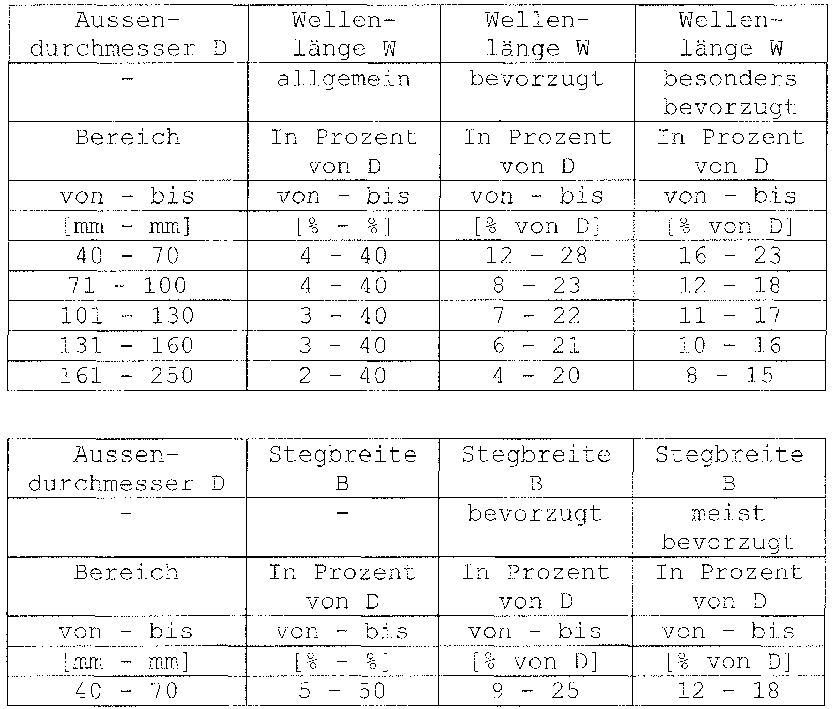

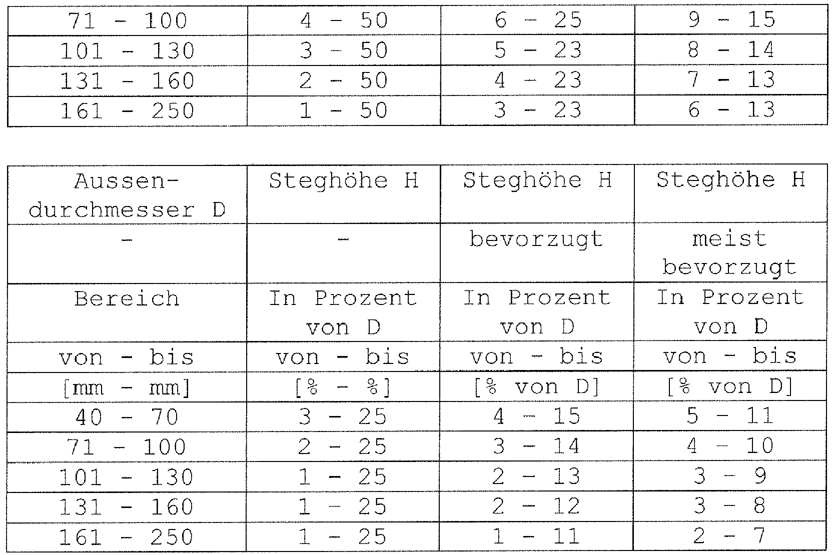

Eine derartige Wellenform (sowohl korrugiert als auch sinusförmig) des Leitungsrohres ist zunächst gegen die Intuition des Fachmanns, da eine Oberflächenvergrösserung der gewünschten Isolation entgegensteht. Die Isolationswerte werden durch diese Wellenform jedoch praktisch nicht beeinflusst. Ohne sich an eine Theorie gebunden zu fühlen, gelingt es durch Wahl dieser Geometrie, verschiedene Vorteile zu vereinen: Einerseits erhöhen sie die Biegbarkeit des Leitungsrohres, ergänzend stabilisieren sie das gesamte Leitungsrohr so dass es bei Bodenbelastung nicht nachgibt, d. h. nicht in sich zusammenfällt.

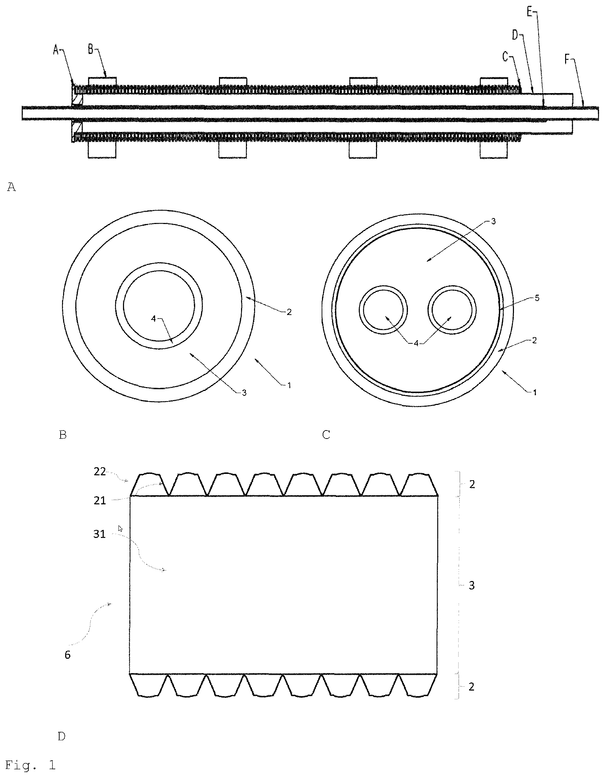

Um möglichst niedrige Biegekräfte zu erhalten ist es vorteilhaft, die Aussendurchmesser der gedämmten Rohre möglichst niedrig zu wählen.
Entsprechend sind die folgenden Aussendurchmesser D bevorzugt, falls ein einziges Mediumrohr vorliegt (Fig.1B) :

| Aussendurchmesser Mediumrohr (4) | Aussendurchmesser D des Leitungsrohrs (1) kleiner als |
|---|---|
| [mm] | [mm] |
| 20 | 76 |
| 25 | 76 |
| 32 | 76 |
| 40 | 91 |
| 50 | 111 |
| 63 | 126 |
| 75 | 142 |
| 90 | 162 |
| 110 | 162 |
| 125 | 182 |
| 140 | 202 |
| 160 | 250 |

Die Erfindung betrifft somit auch thermisch gedämmte Leitungsrohre wie hier beschrieben, wobei Aussendurchmesser von Leitungsrohr (1) und Mediumrohr (4) die hier angegebenen Werte annehmen.

Entsprechend sind die folgenden Aussendurchmesser D bevorzugt, falls zwei Mediumrohre vorliegen (Fig.1C):

| Aussendurchmesser der Mediumrohre (4) | Aussendurchmesser Leitungsrohr kleiner als |
|---|---|
| [mm / mm] | [mm] |
| 20 / 20 | 90 |
| 25 / 25 | 90 |
| 32 / 32 | 105 |
| 40 / 40 | 125 |
| 50 / 50 | 160 |
| 63 / 63 | 180 |
| 75 / 75 | 200 |
| 90 / 90 | 250 |

Die Erfindung betrifft somit auch thermisch gedämmte Leitungsrohre wie hier beschrieben, wobei Aussendurchmesser von Leitungsrohr (1) und die beiden Mediumrohre (4) die hier angegebenen Werte annehmen.

Als besonders geeignet erweisen sich thermisch isolierte Leitungsrohre (1), bei denen Mediumrohr (4) und Wärmedämmung (3) einen Verbund bilden, die eine Folie (5) zwischen Wärmedämmung (3) und Aussenmantel (2) aufweisen und die einen oder mehrere, insbesondere alle, der hier genannten Werte für Ringsteifigkeit, Auslenktest und Längswasserdichtigkeit aufweisen.

Als ganz besonders geeignet erweisen sich thermisch isolierte Leitungsrohre (1), die zusätzlich die folgenden Parameter bezüglich Wanddicke s erfüllen, dabei ist jeweils der allgemeine, bevorzugte und besonders bevorzugte Parameterbereich angegeben; ferner ist die Wanddicke s im oberen Bereich des Stegs gemessen, vgl. Figuren.

| Aussendurchmesser D | Wanddicke s | Wanddicke s | Wanddicke s |
|---|---|---|---|
| Bereich | - | bevorzugt | meist bevorzugt |
| von - bis | von - bis | von - bis | von - bis |
| [mm - mm] | [mm - mm] | [mm - mm] | [mm - mm] |
| 40 - 70 | 0.5-4.5 | 0.8-3.5 | 1.0-3.0 |
| 71 - 100 | 0.5-4.5 | 0.9-3.6 | 1.1-3.1 |
| 101 - 130 | 0.5-5.0 | 1.0-4.0 | 1.2-3.5 |
| 131 - 160 | 0.6-5.5 | 1.1-4.5 | 1.3-4.0 |
| 161 - 250 | 0.6-6.5 | 1.3-5.5 | 1.5-5.0 |

Als ganz besonders geeignet erweisen sich ferner thermisch isolierte Leitungsrohre (1), die zusätzlich die folgenden Parameter bezüglich Metergewicht des Leitungsrohres (1) erfüllen, dabei ist jeweils der allgemeine, bevorzugte und besonders bevorzugte Parameterbereich angegeben:

| Aussendurchmesser D | Metergewicht | Metergewicht | Metergewicht |
|---|---|---|---|
| Bereich | - | bevorzugt | meist bevorzugt |
| von - bis | von - bis | von - bis | von - bis |
| [mm - mm] | [kg/m - kg/m] | [kg/m - kg/m] | [kg/m - kg/m] |
| 40 - 70 | 0.2-2.0 | 0.3-1.5 | 0.5-1.2 |
| 71 - 100 | 0.5-2.4 | 0.6-2.3 | 0.7-2.2 |
| 101 - 130 | 0.6-4.0 | 0.8-3.5 | 1.0-3.0 |
| 131 - 160 | 0.8-6.5 | 1.0-5.5 | 1.2-4.5 |
| 161 - 250 | 1.0-12.0 | 1.2-11.0 | 1.6-10.0 |

**Aussenmantel (2):** Grundsätzlich können alle für thermisch gedämmte Rohre geeigneten Aussenmäntel verwendet werden. Geeignete Aussenmäntel sind als flexibles Rohrstück ausgebildet und weisen eine Wellenform auf, sind also als biegsames Wellrohr ausgebildet wie in Fig.3 dargestellt; insbesondere als biegsames Rohr mit einer korrugierten Struktur.

Eine breite Auswahl an Mantelmaterialien ist geeignet. Solche Mantelmaterialien sind an sich bekannt und sind kommerziell erhältlich oder nach bekannten Verfahren hergestellt. Besonders geeignet sind thermoplastische Polymere. Bevorzugt sind Polyolefine, wie Polyethylene (PE) und Polypropylene (PP). Geeignet sind PE hoher Dichte (HDPE), PE niedriger Dichte (LDPE), lineares PE niedriger Dichte (LLDPE), insbesondere LLDPE.

In einer Ausgestaltung der Erfindung weisen die thermoplastischen Polymere einen Schmelzindex (Melt Flow Rate, MFR) von 0.1-25g/10min, bevorzugt 0.2-20g/10min, meist bevorzugt 0.3-15g/10min auf, gemessen bei einer Last von 2.16kg und einer Temperatur von 190°C gemäss der DIN EN ISO 1133/2012.

In einer Ausgestaltung der Erfindung weisen die thermoplastischen Polymere ein Modul von 300 - 1400 MPa, bevorzugt 350 - 1300 MPa, meist bevorzugt 400 - 800 MPa, bestimmt gemäss der Norm SN EN ISO 527-2/2012, auf.

In einer Ausgestaltung der Erfindung weisen die thermoplastischen Polymere eine Dichte von 870 - 940 kg/m³ auf bestimmt gemäss der ISO 1183-1/2019.

In einer Ausgestaltung der Erfindung beinhalten die thermoplastischen Polymere weniger als 3 Gew.% Additiv zur Erhöhung der UV Stabilität (24), bevorzugt weniger 2.5 Gew.% und am meisten bevorzugt weniger als 2.0 Gew.%, bestimmt mittels ISO 6964. Die Gew.% sind auf das Mantelgewicht bezogen. Geeignete Additive (24) sind bekannt, bspw. Russ.

In einer Ausgestaltung der Erfindung beinhalten die thermoplastischen Polymere (21) Additive, welche in der Lage sind, den Kontrast bei der Beschriftung mit einem Laser zu erhöhen("Additive für Laserbeschriftung" (23)). Dabei kann es sich um Schichtsilikate aus der Familie der Glimmer handeln. Beispielhaft erwähnt seien Additive, welche als Iriotec™ der Fa Merck KgaA kommerziell erhältlich sind. Der Gehalt dieser Additive im Mantelmaterial liegt bei unter 3 Gew.%, bevorzugt unter 2.5 Gew.%, am meisten bevorzugt bei unter 2.0 Gew.%. Die Gew.% sind auf das Mantelgewicht bezogen.

Ohne sich an eine Theorie gebunden zu fühlen wird davon ausgegangen, dass bei den bekannten Leitungsrohren die Aussenmäntel dazu neigen, bei den Bedingungen der Montage auf der Baustelle oder während des Transports beschädigt zu werden. Je niedriger die Aussentemperaturen desto ausgeprägter ist das Risiko der Beschädigung. Die Beschädigung des Aussenmantels scheint einen negativen Einfluss auf die thermische Isolationsfähigkeit zu haben, dies nicht nur am Ort der Beschädigung sondern über weite Bereiche hinaus. Durch die Auswahl der hier beschriebenen Aussenmäntel wird eine gleichbleibend hohe thermische Isolierung sichergestellt.

Als besonders geeignet erweisen sich Aussenmäntel (2), die aus einem korrugierten LLDPE-Rohr bestehen und die hier genannten Werten für Schmelzindex und Modul aufweisen. Die Überlegenheit von LLDPE als Mantelmaterial gegenüber HDPE zeigt sich in einem Auslenktest. Dabei werden die Rohre für 24 h bei -10°C abgekühlt und dann über einen Radius von 400 mm gebogen. Hier zeigen sich beide Rohre prinzipiell geeignet, das LLDPE-Rohr ist jedoch überlegen in seinen Eigenschaften. Der Effekt ist besonders deutlich bei erfindungsgemässen Leitungsrohren, wenn Wärmedämmung (3) und Aussenmantel (2) einen Verbund bilden; bzw. wenn Wärmedämmung (3), Folie (5) und Aussenmantel (2) einen Verbund bilden. Solche Rohre mit LLDPE als Polymer (21) sind somit besonders bevorzugte Ausgestaltungen der Erfindung.

**Wärmedämmung (3):** Die Wärmedämmung umschliesst das Mediumrohr teilweise oder vollständig, bevorzugt vollständig. Die Wärmedämmung kann entlang ihres Querschnitts homogen sein oder aus mehreren Lagen aufgebaut sein. Typischerweise ist die Wärmedämmung in Leitungsrohren homogen aufgebaut.

Als Wärmedämmung sind insbesondere aufgeschäumte Kunststoffe ("Schaumstoffe") geeignet, die in Ihren Zellen ein Zellgas enthalten. Die Wärmedämmung umfasst (d.h. enthält oder besteht aus) einen oder mehreren Schaumstoffen, bevorzugt besteht sie aus einem Schaumstoff. Der Begriff umfasst Hartschäume und Weichschäume.

Schaumstoffe können geschlossenzellig oder offenzellig sein, bevorzugt geschlossenzellig, insbesondere wie in der Norm ISO 4590, Third Edition, 2016-07-15 dargelegt. Problematisch bei den bekannten Leitungsrohren, welche offenzellige Schäume zur Isolation beinhalten, ist die Tatsache, dass diese weder längswasserdicht sind (im Sinne der Norm EN 15632-2:2010+A1:2014 und eine vergleichsweise schlechtere Wärmedämmung aufweisen. Die erfindungsgemässen Rohre weissen daher einen kleineren Aussendurchmesser auf (bei vergleichbaren Isolationseigenschaften). Es gelingt dadurch, kompaktere Leitungsrohre mit gleicher thermischer Leistungsfähigkeit zur Verfügung zu stellen, mit den Vorteilen des geringeren Platzbedarfs der Rohre beim Transport und bei der Verlegung sowie der Möglichkeit engere Biegeradien zu realisieren.

Eine breite Auswahl an Schaumstoffen ist geeignet. Solche Schaumstoffe sind an sich bekannt, besonders geeignet sind Schaumstoffe, welche die Normen DIN EN 253:2015-12 (insbesondere für KMR) und EN15632-1:2009+A1:2014, EN15632-2:2010+A1:2014 und EN15632-3:2010+A1:2014 (insbesondere für PMR) erfüllen. Bevorzugt werden solche Schaumstoffe ausgewählt aus der Gruppe der Polyurethane (PUR) und der Polyisocyanurate (PIR).

In einer Ausgestaltung der Erfindung weisen die Ausgangsmaterialien des Schaumstoffs, also Isocyanate und Polyole im Falle von PUR oder PIR, eine Reaktions- bzw. Startzeit von 10 - 60 s, bevorzugt 15 - 45 s, auf. Eine derartige Startzeit hat sich für das Herstellungsverfahren, wie nachstehend beschrieben, als vorteilhaft erwiesen.

Das zur Erzeugung des Schaumstoffs verwendete Zweikomponentengemisch kann zusätzlich physikalische Treibmittel enthalten. Geeignet sind beispielsweise Hydrofluorolefine und (Cyclo)-Alkane.

In einer Ausgestaltung der Erfindung weist der Schaumstoff eine Dichte im Bereich 30 - 80 kg/m³, bevorzugt 35 - 75 kg/m³, meist bevorzugt 40 - 70 kg/m³, auf (bestimmt gemäss ISO 845:2006). Im Vergleich zu marktüblichen Leitungsrohren ist dieser Wert als niedrig anzusehen.

In einer Ausgestaltung der Erfindung weist der Schaumstoff ein Modul 10 - 30 MPa, bevorzugt 12 - 25 MPa, meist bevorzugt 14 - 23 MPa, auf (bestimmt gemäss DIN EN ISO 527-4:1997-07 für den ausgehärteten Schaum). Im Vergleich zu marktüblichen Leitungsrohren ist dieser Wert als niedrig anzusehen.

In einer Ausgestaltung der Erfindung weist der Schaumstoff eine Druckfestigkeit des ausgehärteten Schaums von 0.10 - 0.30 MPa, bevorzugt 0.12 - 0.28 MPa, meist bevorzugt 0.14 - 0.26 MPa, auf (bestimmt gemäss ISO 844:2014, bei 10 % Stauchung für den ausgehärteten Schaum). Im Vergleich zu marktüblichen Leitungsrohren ist dieser Wert als niedrig anzusehen.

Als besonders geeignet erweisen sich Wärmedämmungen (3), die aus einem geschlossenzelligen PUR-Schaum oder PIR-Schaum (31) bestehen und die hier genannten niedrigen Werten für Dichte, Modul und Druckfestigkeit aufweisen.

Auch geeignet erweisen sich, für bestimmte Anwendungen, Wärmedämmungen (3) die aus einem offenzelligen PE-Schaum (31) bestehen und die hier genannten Parameter aufweisen.

**Mediumrohr (4):** Grundsätzlich können alle für thermisch gedämmte Rohre geeignete Mediumrohre verwendet werden. Geeignete Mediumrohre können starr oder flexibel sein; bevorzugt sind flexible Mediumrohre so dass die Leitungsrohre aufgetrommelt werden können. Ein erfindungsgemässes Leitungsrohr kann eines oder mehrere Mediumrohre umfassen. In einer Ausgestaltung umfasst das erfindungsgemässe Rohr ein einziges Mediumrohr. In einer weiteren Ausgestaltung umfasst das erfindungsgemässe Rohr zwei Mediumrohre.

Das Mediumrohr kann aus polymerem Werkstoffen (ggf. mit einer metallischen Beschichtung) oder metallischen Werkstoffen bestehen. Solche Materialien sind an sich bekannt und sind kommerziell erhältlich oder nach bekannten Verfahren hergestellt. Die Materialien werden vom Fachmann nach Einsatzzweck, ggf. nach Routineversuchen, ausgewählt. In einer Ausgestaltung ist besagtes Mediumrohr (4) ein flexibles Kunststoffrohr, der Kunststoff ausgewählt aus der Gruppe Acrylnitril-Butadien-Styrol (ABS), vernetztes Polyethylen (PEXa, PEXb, PEXc), PE, Polybuten (PB), Polyethylen Raised Temperature (PE-RT). Solche Mediumrohre sind kommerziell erhältlich.

In einer weiteren Ausgestaltung ist besagtes Mediumrohr (4) ein flexibles Kunststoffrohr mit einer äusseren Metallschicht, der Kunststoff ausgewählt aus der Grupp ABS, PEXa, PEXb, PEXc, PE, PB, PE-RT, das Metall ausgewählt aus der Gruppe Aluminium einschliesslich dessen Legierungen. Solche Mediumrohre sind auch als Verbundrohre bekannt und kommerziell erhältlich oder nach bekannten Methoden herstellbar.

In einer weiteren Ausgestaltung ist besagtes Mediumrohr (4) ein flexibles Metallrohr, das Metall ausgewählt aus der Gruppe Kupfer einschliesslich dessen Legierungen, Eisen einschliesslich dessen Legierungen (wie z.B nichtrostende Stähle), Aluminium einschliesslich dessen Legierungen.

Als besonders geeignet erweisen sich Mediumrohre (4), welche aus Kunststoff (mit oder ohne metallische Beschichtung) bestehen. Besonders bevorzugt sind dabei Kunststoffrohre aus PE, PEx oder PE-RT mit oder ohne metallische Beschichtung.

**Folie (5):** Eine Folie zwischen Wärmedämmung und Aussenmantel ist optional. Eine solche Folie erleichtert die Herstellung des erfindungsgemässen Leitungsrohres und wirkt sich positiv auf die Gebrauchseigenschaften aus.

Solche Folien sind an sich bekannt; geeignet sind Folien mit einer Dicke von 0.01 - 0.20 mm, insbesondere 0.05 - 0.15 mm. Geeignete Folienmaterialien sind dem Fachmann bekannt, bspw. Polyamide, Polyolefine, Polyester (einschliesslich PET), insbesondere PET-Folien oder Polyamide sind geeignet.

Die genannten Folien (5) können einseitig oder beidseitig mit einer Kaschierung (bspw. aus Polyethylen oder Poylpropylen) versehen sein. Ausserdem kann eine oder auch beide Aussenseiten der Folie (5) eine Oberflächenbeschichtung aufweisen, insbesondere eine Coronabehandlung.

Die Folie (5) kann teilweise oder vollständig mit Wärmedämmung (3) und / oder Aussenmantel (2) verbunden sein oder als separates Element vorliegen. Dies hängt insbesondere von der Wahl des Folienmaterials und den Herstellungsbedingungen ab. Entsprechend betrifft die Erfindung auch ein thermisch gedämmtes Leitungsrohr wie hier beschrieben, zusätzlich enthaltend eine Folie (5) welche entweder (i)stoffschlüssig mit der Wärmedämmung (3) verbunden ist oder (ii) stoffschlüssig mit dem Aussenmantel (2) verbunden ist oder (iii) stoffschlüssig mit Wärmedämmung (3) und Aussenmantel (2) verbunden ist oder (iv) als eigenes strukturelles Element vorliegt.

Es wurde gefunden, dass thermisch gedämmte Rohre, welche eine Folie (5) enthalten, eine verbesserte Biegbarkeit aufweisen. Wie bereits erwähnt, ist ein geringer Biegeradius in der Praxis ein wünschenswerter Parameter. Das Vorliegen einer Folie wirkt somit kooperativ mit der Wellenform (22) des Aussenmantels (2) zusammen. Ferner ermöglicht die Folie (5) die nachstehend beschriebenen Herstellungsverfahren (1-1) und (1-2).

**Verwendungen:** Entsprechend den vorangehenden Ausführungen ist das hier beschriebene Leitungsrohr geeignet zur Verwendung in einen Rohrverbundsystem. Die Erfindung betrifft daher auch ein Rohrverbundsystem umfassend thermisch gedämmte Rohre (1) wie hier beschrieben und die Verwendung von thermisch gedämmten Rohren wie hier beschrieben zur Herstellung eines Rohrverbundsystems.

Entsprechend den vorangehenden Ausführungen ist das hier beschriebene Leitungsrohr geeignet zum Transport von kühlenden oder wärmenden Medien. Die Erfindung betrifft daher auch die Verwendung von thermisch gedämmten Rohren wie hier beschrieben zur Bereitstellung von Fernwärme, Nahwärme, oder Kühlung.

In einem **zweiten Aspekt** betrifft die Erfindung verschiedene Verfahren zur Herstellung von thermisch gedämmten Rohren. Analoge Verfahren sind bekannt und in den auf S.1 zitierten Dokumenten beschrieben. Diese Dokumente verweisen jedoch nicht auf die hier verwendeten spezifischen Ausgangsmaterialien für den geschlossenzelligen Schaumstoff (31) und den thermoplastischen Kunststoff (21).

Bei den erfinderischen Verfahren wird unterschieden, ob eine Folie (5) vorliegt oder nicht.

Grundsätzlich können die hier beschriebenen Leitungsrohre (1) in Analogie zu den bekannten Verfahren hergestellt werden. Dabei werden die bekannten Ausgangsmaterialien durch die hier beschriebenen Ausgangsmaterialien ersetzt. Entsprechend können an sich bekannte Anlagen für die Herstellung verwendet werden, ggf. nach Anpassung an neue Parameter, wie sie der Fachmann in seiner Routinetätigkeit durchführen kann. Dieser Aspekt der Erfindung soll nachstehend näher erläutert werden.

**Verfahren 1-1: kontinuierliche Herstellung von Leitungsrohren (1) mit Folie (5).** In dieser Ausgestaltung betrifft die Erfindung ein Verfahren zur kontinuierlichen Herstellung eines Leitungsrohrs (1), welches Leitungsrohr mindestens ein Mediumrohr (4), eine geschäumte Wärmedämmung (3) und einen gewellten Aussenmantel (2) aus thermoplastischem Kunststoff sowie eine Folie (5) zwischen Aussenmantel (2) und Wärmedämmung (3) umfasst, mit den Schritten:
(a) Bilden eines Folienschlauchs um das mindestens eine Mediumrohr (4) und Einbringen des schaumbildenden Ausgangsmaterials für die Bildung der geschäumten Wärmedämmung in den Folienschlauch,
(b) Hindurchführen des Mediumrohrs mit dem Folienschlauch durch einen Spritzkopf, mittels welchem der Aussenmantel (2) ringförmig extrudiert wird, und
(c) Erzeugen der Wellenform des Aussenmantels (4); insbesondere in einem Corrugator.

Vorteilhaft wird in dieser Ausgestaltung der Aussenmantel getrennt von dem vom Folienschlauch umgebenen Mediumrohr in den Corrugator geführt und im Corrugator geformt.

Vorteilhaft erfolgt in dieser Ausgestaltung die Bildung der geschäumten Wärmedämmung (3) im zuvor korrugierten Aussenmantel.

Vorteilhaft erfolgt in dieser Ausgestaltung die Formung des Aussenmantels im Corrugator durch Einsatz von Vakuum zur Bildung der Wellenform (22).

Vorteilhaft wird in dieser Ausgestaltung ein schaumbildendes Ausgangsmaterial verwendet, dessen Reaktionszeit bzw. Startzeit einstellbar ist. Geeignete Ausgangsmaterialien sind auf eine Reaktionszeit bzw. Startzeit von 10 Sekunden bis 60 Sekunden einstellbar, insbesondere 15 Sekunden bis 45 Sekunden.

Vorteilhaft wird in dieser Ausgestaltung die Bildung der geschäumten Wärmedämmung durch Kühlung verzögert, wobei insbesondere bei der Hindurchführung des Mediumrohrs mit dem Folienschlauch durch den Spritzkopf eine Kühlung des Folienschlauchs mit dem darin enthaltenen Ausgangsmaterial für die Bildung der geschäumten Wärmedämmung erfolgt.

Vorteilhaft wird in dieser Ausgestaltung das vom Folienschlauch umgebene Mediumrohr (4) mittels eines Schutzrohrs durch den Spritzkopf geführt, wobei das Schutzrohr bis in die geschlossenen Formbacken (B) des Corrugators geführt ist. Vorteilhaft sind solche Schutzrohre innenseitig, vorzugsweise auch aussenseitig, mit einer reibungsmindernden Beschichtung versehen, insbesondere mit einer (PTFE) enthaltenden oder aus diesem bestehenden Beschichtung. Vorteilhaft sind solche Schutzrohre in Längsrichtung des Extruders verstellbar, wobei die Lage dessen vorderen Endes im Corrugator derart eingestellt wird, dass der Aussenmantel in dem um das Schutzrohr herum verlaufenden Abschnitt des Corrugators fertig geformt ist.

Vorteilhaft wird in dieser Ausgestaltung das Verfahren kontinuierlich mit einer Geschwindigkeit von 2 - 10 m/min geführt. Die so erhaltenen Rohre werden entweder abgelängt, typischerweise zu Rohrstücken von 1 - 10 m oder auf Trommeln aufgerollt ("aufgetrommelt"), typischerweise zu Rohrstücken von 20 - 500 m Länge.

**Verfahren 1-2: diskontinuierliche Herstellung von Leitungsrohren (1) mit Folie (5).** In dieser Ausgestaltung betrifft die Erfindung ein Verfahren zur diskontinuierlichen Herstellung eines Leitungsrohrs (1), welches Leitungsrohr mindestens ein Mediumrohr (4), eine geschäumte Wärmedämmung (3) und einen gewellten Aussenmantel (2) aus thermoplastischem Kunststoff sowie eine Folie (5) zwischen Aussenmantel (2) und Wärmedämmung (3) umfasst, mit den Schritten:
(a) Bilden eines Folienschlauchs um das Mediumrohr (4);
(b) Einführen des Mediumrohrs mit dem Folienschlauch in ein gewelltes Rohr, ggf. gefolgt von Stabilisierung des Mediumrohres durch ein Innenrohr (F);
(c) Verschliessen der so erhaltenen Konstruktion an einem der beiden Enden mit einem Flansch (A).
(d) Einbringen des schaumbildenden Ausgangsmaterials für die Bildung der geschäumten Wärmedämmung in den Spalt zwischen Mediumrohr und Folienschlauch.
e) Verschliessen der so erhaltenen Konstruktion an dem offenen Ende mit einem Flansch, der mit einem Entlüftungsloch versehen ist, durch den die durch den entstehenden Schaum verdrängte Luft entweichen kann.
f) Verschliessen des Lüftungslochs mit einem Stopfen bevor der entstehende Schaum an dem Entlüftungsloch ankommt.
g) Entfernen der Flansche nach dem Aushärten des Schaums.

Entsprechend wird in dieser Ausgestaltung der gewellte Aussenmantel in einem separaten Schritt hergestellt.

**Verfahren 2: Herstellung von Leitungsrohren (1) ohne Folie** (5): In dieser Ausgestaltung betrifft die Erfindung ein Verfahren zur Herstellung eines Leitungsrohrs (1), welches Leitungsrohr mindestens ein Mediumrohr (4), eine geschäumte Wärmedämmung (3) und einen gewellten Aussenmantel (2) aus thermoplastischem Kunststoff jedoch keine Folie (5) zwischen Aussenmantel (2) und Wärmedämmung (3) umfasst, mit den Schritten:
(a): Einführen des Mediumrohrs in ein gewelltes Rohr, ggf. gefolgt von Stabilisierung des Mediumrohrs durch ein Innenrohr (F);
(b) Verschliessen der so erhaltenen Konstruktion an einem der beiden Enden mit einem Flansch (A).
(c) Einbringen des schaumbildenden Ausgangsmaterials für die Bildung der geschäumten Wärmedämmung in den Spalt zwischen Mediumrohr und gewelltem Rohr; bspw. mit einer Lanze.
(d) Verschliessen der so erhaltenen Konstruktion an dem offenen Ende mit einem Flansch, der mit einem Entlüftungsloch versehen ist, durch den die durch den entstehenden Schaum verdrängte Luft entweichen kann.
(e) Verschliessen des Lüftungslochs mit einem Stopfen bevor der entstehende Schaum an dem Entlüftungsloch ankommt.
f) Entfernen der Flansche nach dem Aushärten des Schaums.

In einem **dritten Aspekt** betrifft die Erfindung ein Verbundmaterial (6), auch Komposit genannt. Diese Verbundmaterialien sind zur thermischen Isolation breit einsetzbar, insbesondere sind sie geeignet als Komponente der hier beschriebenen thermisch gedämmten Leitungsrohre und Rohrverbundsysteme. Dieser Aspekt der Erfindung soll nachstehend näher erläutert werden

In einer Ausführungsform betrifft die Erfindung ein Verbundmaterial (6) umfassend ein erstes Polymer (31) im direkten Kontakt mit einem zweiten Polymer (21), wobei besagtes erstes Polymer ein geschlossenzelliger Schaumstoff (31), wie im 1. Aspekt der Erfindung definiert, ist; und besagtes zweites Polymer ein thermoplastischer Kunststoff (21), wie im 1. Aspekt der Erfindung definiert, ist. Die besagten Polymere (31) und (21) können aus den gleichen oder verschiedenen Monomeren bestehen, bevorzugt bestehen sie aus verschiedenen Monomeren.

In einer Ausführungsform betrifft die Erfindung ein Verbundmaterial (6) umfassend ein erstes Polymer (31) ein zweites Polymer (21) und eine dazwischen angeordnete Folie (5), wobei besagtes erstes Polymer ein Schaumstoff wie im 1. Aspekt der Erfindung definiert (insbesondere ein geschlossenzelliger Schaumstoff), ist; und besagtes zweites Polymer ein thermoplastischer Kunststoff, wie im 1. Aspekt der Erfindung definiert, ist; und besagte Folie wie vorstehend definiert ist; und die besagten Polymere (31) und (21) bevorzugt aus verschiedenen Monomeren bestehen; und besagte Folie mit dem ersten und dem zweiten Polymer einen Verbund bildet.

In einer weiteren vorteilhaften Ausführungsform ist das erste Polymer (31) ausgewählt aus der Gruppe umfassend Polyurethane (PU) und Polyisocyanurate (PIR).

In einer weiteren vorteilhaften Ausführungsform ist das zweite Polymer (21) ausgewählt aus der Gruppe umfassend Polyethylene (PE) und Polypropylene (PP).

In einer weiteren vorteilhaften Ausführungsform ist besagte Folie (5) ausgewählt aus der Gruppe umfassend PET und Polyamid.

Die Erfindung betrifft ferner die Verwendung eines Verbundmaterials (6) wie hier beschrieben
- zur Herstellung von thermisch gedämmten Rohren;
- zur Herstellung von thermisch gedämmten Behältern;
- Zur Herstellung von thermisch gedämmten Isolationselementen wie Muffen, Verbindungsstücken oder Abdeckvorrichtungen (insbesondere geeignet zur Verbindung der erfinderischen Leitungsrohre); sowie
- zur Herstellung von Rohrverbundsystemen.

In einem **vierten Aspekt** betrifft die Erfindung ferner Verfahren zur Herstellung eines Verbundmaterials (6) wie hier beschrieben. Grundsätzlich können die hier beschriebenen Verbundmaterialien in Analogie zu den bekannten Verfahren hergestellt werden. Dabei werden die bekannten Ausgangsmaterialien durch die hier beschriebenen Ausgangsmaterialien ersetzt. Entsprechend können an sich bekannte Anlagen für die Herstellung verwendet werden, ggf. nach Anpassung an neue Parameter, wie sie der Fachmann in seiner Routinetätigkeit durchführen kann.

Die nachstehend genannten **Beispiele** dienen der weiteren Erläuterung der Erfindung; sie sollen die Erfindung in keiner Weise limitieren.

### # 1: Herstellung der Aussenmäntel

Mit Hilfe eines Korrugators des Typs HD 250-38 der Fa Drossbach, Rain am Lech, Deutschland, wurden korrugierte Rohre aus Polyethylen (PE) hergestellt. Dabei wurden die dafür verwendete Poylethylentype, die äussere Topographie und das Metergewicht variiert. Diese korrugierten Rohre dienten als Aussenmäntel für die herzustellenden thermisch gedämmten Rohre im Beispiel 2.

Als Materialien kamen Polyethylen hoher Dichte (HDPE) und lineares Polyethylen niedriger Dichte (LLDPE) zum Einsatz. Das HDPE hatte eine Dichte von 955 kg/m³ gemäss der Norm D792 und einen Schmelzindex von 0.35 g/10 min gemessen bei einer Temperatur von 190°C und einer Last von 2.16 kg gemäss der Norm ASTM D1238:2013. Das Elastizitätsmodul wurde experimentell zu 1267 MPa bestimmt, gemäss der Norm ASTM D1238:2013.

Das LLDPE hatte eine Dichte von 920 kg/m³ gemäss der Norm ASTM D792:2013 und einen Schmelzindex von 0.90 g/10 min, gemessen bei einer Temperatur von 190°C und einer Last von 2.16 kg gemäss der Norm ASTM D1238:2013. Das Elastizitätsmodul wurde experimentell zu 491 MPa bestimmt, gemäss der Norm ASTM D1238:2013.

Zur Erzeugung einer unterschiedlichen Topographie kamen zwei unterschiedliche Backensätze zur Anwendung. Diese sind bezeichnet mit Backenform 1 und Backenform 2 und in der Fig 7 näher charakterisiert.

Das Gewicht dieser korrugierten Rohre wurde durch Wägen bestimmt und in das Ergebnis als Metergewicht in der Einheit g/m angegeben, siehe Tabelle 1 und 2.

Durch Veränderung der Bandgeschwindigkeit bzw. Anpassung der Austragsleistung des Extruders wurden Muster mit abgestuften Metergewichten erhalten.

### # 2: Herstellung der gedämmten Rohre

Die Herstellung der gedämmten Rohre wird in Fig. 1 veranschaulicht. Die Mäntel (2), (C in Fig.1A) aus Beispiel 1 wurden im nachfolgenden Schritt zu gedämmten Leitungsrohren weiterverarbeitet; vgl. Fig. 1. Dazu wurde ein Mediumrohr ((4), (E) in Fig. 1A) aus vernetztem Polyethylen (PEX) mit dem Aussendurchmesser von 50 mm und einer Wanddicke von 4.6 mm mit einem Folienschlauch ((5) umgeben. Dieser Folienschlauch bestand aus einer Folie der Dicke von 0.08 mm aus Polyethylenterephthalat (PET) und hatte einen Umfang von 335 mm.

Zur Begradigung des PEX-Rohrs wurde als Hilfsmittel ein Stahlrohr (Innenrohr(F) in Fig. 1) mit dem Aussendurchmesser von 38 mm hindurchgeschoben.

Die Länge des PEX-Rohres betrug 2040 mm, die Länge des Stahlrohrs betrug 2200 mm, die Länge des Aussenmantels betrug 1970 - 2000 mm.

Das PEX-Rohr (E) mit dem Folienschlauch und dem innenliegenden Stahlrohr (F) wurde in den korrugierten Aussenmantel (C) geschoben und am Ende mit einem Flansch

(A) verschlossen. Der gesamte Aufbau wurde auf einem Tisch gelagert und um einen Winkel um 5 ° geneigt. Der Aussenmantel wurde mit den entsprechenden Formbacken (B) fixiert um eine Verbiegung oder Verformung des Rohres während des Ausschäumens zu verhindern.

In den Spalt zwischen der Schlauchfolie und dem PE-Rohr wurde das Zweikomponentengemisch aus Polyol und Isocyanat an dem leicht erhöhten Ende des Rohraufbaus mit Hilfe einer Lanze eingeschossen.

Es kamen zur Herstellung der Musterrohre zwei unterschiedliche Polyurethanschäume zum Einsatz.

Einer der beiden Schäume erhält für die nachfolgende Ausführung die Bezeichnung «weich». Experimentell wurden an dem ausgehärteten Schaum folgende Eigenschaften bestimmt: Druckfestigkeit bei 10 % Stauchung zu 0.14 MPa, gemessen gemäss der Norm ISO 844:2014. Das Elastizitäzsmodul zu 14.3 MPa gemäss der Norm IN EN ISO 527-4: 1997-07 Diese Werte wurden an Probenkörpern erhalten mit einer Dichte von 65.2 kg/m³, bestimmt gemäss der Norm ISO 845:2006.

Der andere Polyurethanschaum, der zur Anwendung kam erhält für die nachfolgende Beschreibung die Bezeichnung «hart». Experimentell wurden an dem ausgehärteten Schaum folgende Eigenschaften bestimmt: Druckfestigkeit bei 10 % Stauchung zu 0.27 MPa, gemessen gemäss der Norm ISO 844:2014. Das Elastizitätsmodul zu 25.0 MPa gemäss der Norm DIN EN ISO 527-4:1997-07. Diese Werte wurden an Probenkörpern erhalten mit einer Dichte von 63.3 kg/m³, bestimmt gemäss der Norm ISO 845:2006.

Die hergestellten Rohrmuster und die Materialkombinationen sind in den Tabellen 1 und 2 zusammengefasst.

### # 3: Messung der Auslenkkräfte

An den Rohrmustern wurde jeweils die Kraft bestimmt, die benötigt wurde, um das jeweilige Rohr um einen bestimmten Betrag auszulenken.

Dazu wurde das Rohr wie in der Fig. 2 gezeigt eingespannt. Der Abstand zwischen dem Fixpunkt und der Angriffspunkt der Verbindung zur Messdose betrug 1100 mm. An dem freien Ende wurde das Rohr mit einer Bohrung versehen, durch welche eine Gewindestange geschoben wurde, an welcher ihrerseits rechts und links eine Kette befestigt war, die mit der Zugmessdose verbunden war. Die Zugmessdose war Teil einer Universalprüfmaschine des Typs Instron 3367. Mit der Geschwindigkeit von 50 mm wurde das freie Rohrende nach oben gezogen. Die Kraft, die nach einer Wegstrecke von 300 mm erreicht war, wurde als Messwert aufgezeichnet.

An jedem einzelnen Rohrmuster wurden vier Einzelwerte gemessen, wobei nach jeder Messung das Rohr axial um 90 ° gedreht wurde. So ergaben sich durch die Messung an den Positionen 0 °, 90 °, 180 ° und 270 ° die vier Einzelwerte. In der Tabelle sind die Einzelwerte für jedes Rohr und der Mittelwert aufgeführt, der sich aus diesen vier Einzelmessung ergibt.

Von jedem Rohrtyp wurden mindestens zwei Rohre vermessen, die daraus resultierenden Mittelwerte sind in der Tabellen 1 und 2 **fett** hervorgehoben.

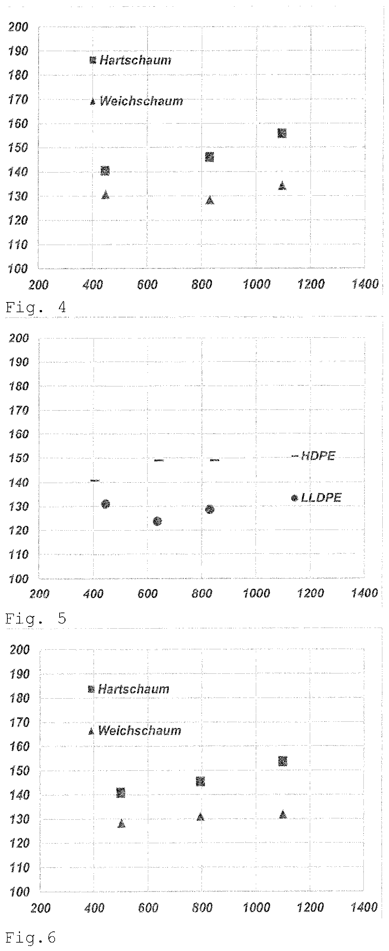

In der graphischen Auftragung wurden die **fett** hervorgehobenen gemittelten Metergewichte der Aussenmäntel und die **fett** hervorgehobenen Mittelwerte der Auslenkkräfte verwendet. Dies ist in den Abbildungen 4, 5 und 6 gezeigt. Es ist eindeutig erkennbar, dass die niedrigsten Auslenkkräfte erreicht werden wenn als Material für den Aussenmantel LLDPE anstatt HDPE zur Anwendung kommt. Ausserdem ist klar erkennbar, dass die niedrigsten Auslenkkräfte erreicht werden, wenn ein weicher Polyurethanschaum anstatt eines harten Polyurethanschaums zur Anwendung kommt.

Eine Kombination aus einem HDPE Mantel mit einem weichen Polyurethanschaum ist in der Summe weniger gut geeignet zur Erreichung niedriger Auslenkkräfte.

**Tabelle 1: Zusammenfassung der Messwerte für unterschiedliche Rohrmuster, die in den Fig. 4 und 5 graphisch dargestellt sind, Backenform 1.**

| No. | Mantelmaterial | Schaumtyp | Metergewicht des Aussenmantels | | Auslenkkraft | |
|---|---|---|---|---|---|---|
| | | | Einzelwerte | Mittelwert | Einzelwerte | Mittelwert |
| - | - | - | [g/m] | [g/m] | [N] | [N] |
| 118 | HDPE | Hart | 406 | - | 143/138/ 136/150 | 142 |
| 119 | HDPE | Hart | 409 | - | 140/151/ 136/134 | 140 |
| | | | | 408 | | 141 |
| 143 | HDPE | Hart | 645 | - | 155/158/ 152/148 | 153 |
| 144 | HDPE | Hart | 643 | - | 140/149/ 149/139 | 149 |
| | | | | **644** | | **149** |
| 172 | HDPE | Hart | 849 | - | 158/152/ 150/147 | 152 |
| 173 | HDPE | Hart | 848 | - | 144/152/ 145/141 | 146 |
| | | | | **848** | | **149** |
| 277 | LLDPE | Hart | 446 | - | 153/132/ 132/140 | 139 |
| 278 | LLDPE | Hart | 447 | - | 143/147/ 137/141 | 142 |
| | | | | **447** | | **140** |
| 321 | LLDPE | Weich | 638 | - | 143/152/ 155/144 | 148 |
| 326 | LLDPE | Weich | 638 | - | 136/129/ 127/128 | 130 |
| 327 | LLDPE | Weich | 638 | - | 112/120/ 112/107 | 112 |
| 328 | LLDPE | Weich | 638 | - | 101/111/ 105(98 | 104 |
| | | | | **638** | | **124** |
| 338 | LLDPE | Hart | 828 | - | 151/152/ 163/160 | 157 |
| 339 | LLDPE | Hart | 827 | - | 137/132/ 143/138 | 137 |
| 345 | LLDPE | Hart | 828 | - | 148/146/ 142/141 | 144 |
| | | | | **828** | | **146** |
| 470 | LLDPE | Hart | 1093 | - | 138/151/ 141/157 | 147 |
| 472 | LLDPE | Hart | 1091 | - | 175/163/ 159/161 | 164 |
| 475 | LLDPE | Hart | 1092 | - | 164/164/ 151/152 | 158 |
| 476 | LLDPE | Hart | 1096 | - | 165/149/ 148/154 | 154 |
| | | | | **1095** | | **156** |
| 289 | LLDPE | Weich | 447 | - | 132/133/ 125/126 | 129 |
| 291 | LLDPE | Weich | 450 | - | 121/126/ 121/123 | 123 |
| 295 | LLDPE | Weich | 445 | - | 130/139/ 135/129 | 133 |
| 304 | LLDPE | Weich | 304 | - | 143/142/ 139/132 | 139 |
| | | | | **447** | | **131** |
| 353 | LLDPE | Weich | 832 | - | 113/115/ 124/120 | 118 |
| 355 | LLDPE | Weich | 830 | - | 132/131/ 128/132 | 131 |
| 358 | LLDPE | Weich | 827 | - | 134/129/ 131/124 | 130 |
| 362 | LLDPE | Weich | 832 | - | 138/141/ 128/138 | 136 |
| | | | | **830** | | **129** |
| 477 | LLDPE | Weich | 1092 | - | 120/126/ 117/115 | 119 |
| 480 | LLDPE | Weich | 1093 | - | 138/140/ 129/132 | 135 |
| 481 | LLDPE | Weich | 1097 | - | 140/151/ 147/147 | 146 |
| 482 | LLDPE | Weich | 1098 | - | 136/141/ 139/132 | 137 |
| | | | | **1095** | | **134** |

### Beispiel 4: Einfluss der Schaumhärte bei einer anderen Manteltopographie

Der Einfluss der Schaumhärte wurde auch noch für eine andere Manteltopographie gezeigt. Dazu wurden wie in Beispiel 1 beschrieben Aussenmäntel aus LLDPE gefertigt unter Verwendung der Backen mit der Backenform 2, der in der Fig. 7 gezeigt ist. Diese Aussenmäntel wurden nun wie in Beispiel 2 beschrieben mit einem Mediumrohr versehen und ausgeschäumt. Es wurden an diesen Mustern die Auslenkkräfte bestimmt wie bereits im Beispiel 3 beschrieben.

Die Ergebnisse sind in der Tabelle 2 zusammengefasst. Auch hier ist deutlich zu erkennen, dass die Auslenkkräfte für die Rohrmuster mit dem weicheren Schaum niedriger sind als bei denen, welche den härteren Schaum beinhalten.

**Tabelle 2: Zusammenfassung der Messwerte für unterschiedliche Rohrmuster, die in der Abbildung 6 graphisch dargestellt sind, Backenform 2.**

| No. | Mantelmaterial | Schaum -typ | Metergewicht des Aussenmantels | | Auslenkkraft | |
|---|---|---|---|---|---|---|
| | | | Einzelwerte | Mittelwert | Einzelwerte | Mittelwert |
| - | - | - | [g/m] | [g/m] | [N] | [N] |
| 419 | LLDPE | Hart | 499 | - | 152/152/ 156/142 | 151 |
| 423 | LLDPE | Hart | 500 | - | 128/142/ 153/145 | 142 |
| 426 | LLDPE | Hart | 502 | - | 125/128/ 130/137 | |
| | | | | 500 | | 141 |
| 428 | LLDPE | Weich | 503 | - | 127/127/ 125/118 | 124 |
| 429 | LLDPE | Weich | 502 | - | 106/116/ 115/105 | 111 |
| 431 | LLDPE | Weich | 503 | - | 159/155/ 141/147 | 150 |
| | | | | **503** | | **128** |
| 436 | LLDPE | Hart | 797 | - | 138/141/ 149/145 | 144 |
| 437 | LLDPE | Hart | 794 | - | 142/162/ 147/136 | 147 |
| 439 | LLDPE | Hart | 796 | - | 135/145/ 148/128 | 139 |
| 442 | LLDPE | Hart | 791 | - | 148/156/ 161/145 | 152 |
| | | | | **795** | | **145** |
| 443 | LLDPE | Weich | 795 | - | 123/131/ 134/130 | 130 |
| 444 | LLDPE | Weich | 796 | - | 117/132/ 124/121 | 123 |
| 445 | LLDPE | Weich | 793 | - | 132/151/ 149/136 | 142 |
| 446 | LLDPE | Weich | 794 | - | 129/137/ 134/120 | 130 |
| | | | | **795** | | **131** |
| 451 | LLDPE | Hart | 1099 | - | 153/163/ 163/167 | 162 |
| 453 | LLDPE | Hart | 1096 | - | 145/147/ 151/152 | 149 |
| 457 | LLDPE | Hart | 1099 | - | 145/156/ 155/143 | 150 |
| 458 | LLDPE | Hart | 1097 | - | 160/160/ 149/151 | 155 |
| | | | | **1098** | | **154** |
| 460 | LLDPE | Weich | 1098 | - | 141/150/ 142/127 | 140 |
| 461 | LLDPE | Weich | 1098 | - | 114/126/ 131/127 | 124 |
| 462 | LLDPE | Weich | 1100 | - | 120/128/ 133/130 | 128 |
| 463 | LLDPE | Weich | 1100 | - | 133/142/ 133/136 | 136 |
| | | | | **1099** | | **132** |

## Patentansprüche

1. Thermisch gedämmtes Leitungsrohr (1), umfassend mindestens ein Mediumrohr (4), mindestens eine um das Mediumrohr herum angeordnete Wärmedämmung (3) und mindestens einen um die Wärmedämmung herum angeordneten Aussenmantel (2), **dadurch gekennzeichnet, dass** besagte Wärmedämmung (3) einen Schaumstoff (31) umfasst welcher eine Dichte von 30-80kg/m³ gemäss ISO 845:2006 aufweist
besagter Aussenmantel (2) einen thermoplastischen Kunststoff (21) umfasst, welcher
• eine Wellenform (22), insbesondere eine korrugierte Struktur, aufweist,
• ein Modul von 300-1400 MPa gemäss SN EN ISO 527-2/2012 aufweist.

2. Leitungsrohr gemäss Anspruch 1, **dadurch gekennzeichnet, dass** der Aussenmantel (2) eines oder mehrere der folgenden Kriterien erfüllt:
• der Kunststoff (21) umfasst ein Polymer aus der Gruppe der Polyolefine, insbesondere besteht er aus einem Polyethylen oder Polypropylen, bspw. LLDPE;
• Schmelzindex des Kunststoffs (21) ist 0.1 - 25 g/10 min, gemessen bei einer Last von 2.16 kg und einer Temperatur von 190 °C gemäss DIN EN ISO 1133/2012.

3. Leitungsrohr gemäss Anspruch 1, **dadurch gekennzeichnet, dass** die Wärmedämmung (3) eines oder mehrere der folgenden Kriterien erfüllt:
• der Schaumstoff (31) umfasst ein Polymer ausgewählt aus der Gruppe der Polyurethane (PU) und Polyisocyanurate (PIR), insbesondere wobei deren Ausgangsmaterialien eine Reaktions- bzw. Startzeit von 10 - 60 s haben;
• der Schaumstoff (31) ist zu mindestens 60% geschlossenzellig gemäss ISO 4590, Third Edition, 2016-07-15;
• der der Schaumstoff (31) eine Druckfestigkeit von 0.1-0.3 MPa gemäss ISO 844:2014 bei 10% Stauchung auf;
• der Schaumstoff (31) weist ein Modul von 10 -30 MPa gemäss ISO 1926 auf.
•

4. Leitungsrohr gemäss Anspruch 1, **dadurch gekennzeichnet, dass** das Mediumrohr (4) als ein einziges Rohrstück ausgebildet ist und ausgewählt ist aus der Gruppe umfassend:
• gewelltes oder glattes Kunststoffrohr ohne Metallbeschichtung;
• gewelltes oder glattes metallbeschichtetes Kunststoffrohr; oder
• gewelltes oder glattes Metallrohr;

5. Leitungsrohr gemäss Anspruch 1-7, **dadurch gekennzeichnet, dass**
• der Aussenmantel (2) einen Aussendurchmesser D aufweist und
• der Aussenmantel (2) eine korrugierte Wellenform, charakterisiert durch Wellenlänge W, Stegbreite B und Steghöhe H, aufweist,
wobei folgende Parameter erfüllt werden:
• D=40-70mm, W=4-40% von D, B=5-50% von D, H=3-25% von D; oder
• D=71-100mm, W=4-40% von D, B=4-50% von D, H=2-25% von D; oder
• D=101-130mm, W=3-40% von D, B=3-50% von D, H=1-25% von D; oder
• D=131-160mm, W=3-40% von D, B=2-50% von D, H=1-25% von D; oder
• D=161-250mm, W=2-40% von D, B=1-50% von D, H=1-25% von D.

6. Leitungsrohr gemäss Anspruch 1-5, **dadurch gekennzeichnet, dass**
• Mediumrohr (4) und Wärmedämmung (3) einen Verbund bilden; oder
• Aussenmantel (2) und Wärmedämmung (3) einen Verbund bilden; oder
• Aussenmantel (2) und Wärmedämmung (3) und Mediumrohr (4) einen Verbund bilden.

7. Leitungsrohr gemäss einem der Ansprüche 1-6, **dadurch gekennzeichnet, dass** es eine Ringsteifigkeit von mindestens 4 kN/m2, bevorzugt mindestens 10 kN/m2, meist bevorzugt mindestens 15 kN/m2 gemäss der SN EN ISO 9969, 2016-05 aufweist.

8. Leitungsrohr gemäss Anspruch 1-7, **dadurch gekennzeichnet, dass** zwischen Aussenmantel (2) und Wärmedämmung (3) eine Folie (5) angeordnet ist; wobei diese Folie bevorzugt eines oder mehrere der folgenden Kriterien erfüllt:
• die Folie (5) umfasst oder besteht aus einem Material ausgewählt aus der Gruppe PET, PE oder PA;
• die Folie (5) weist eine Gesamtdicke von 0.02-0.15 mm auf;
• die Folie (5) weist auf mindestens einer Seite eine Kaschierung auf;
• die Folie (5) weist auf mindestens einer Seite eine Oberflächenbehandlung auf.

9. Leitungsrohr gemäss Anspruch 8, **dadurch gekennzeichnet, dass**
• Folie (5) und Wärmedämmung (3) einen Verbund bilden; oder
• Folie (5) und Aussenmantel (2) einen Verbund bilden; oder
• Folie (5) und Aussenmantel (2) und Wärmedämmung (3) einen Verbund bilden; oder
• Folie (5) keinen Verbund mit Wärmedämmung (3) sowie keinen Verbund Aussenmantel (2) bildet.

10. Rohrverbundsystem umfassend thermisch gedämmte Rohre (1) nach einem der Ansprüche 1 bis 9 oder Verbundmaterialien (6) nach einem der Ansprüche 13 bis 14.

11. Verwendung eines thermisch gedämmten Rohres nach einem der Ansprüche 1 bis 9
• zur Herstellung eines Rohrverbundsystems; oder
• zur Bereitstellung von Fernwärme, Nahwärme, oder Kühlung.

12. Verfahren zur Herstellung eines Leitungsrohres (1) nach Anspruch 8 oder 9 umfassend die Schritte:
(a) Bilden eines Folienschlauchs aus der Folie (5) um das mindestens eine Mediumrohr (4) und Einbringen des schaumbildenden Ausgangsmaterials für die Bildung des geschlossenzelligen Schaumstoffs (31) in den Folienschlauch
(b) Hindurchführen des Mediumrohrs (4) mit dem Folienschlauch durch einen Extruder, mittels welchem der Aussenmantel (2) ringförmig extrudiert wird, und
(c) Erzeugen der Wellenform des Aussenmantels (4) in einem Corrugator;
wobei insbesondere der Aussenmantel getrennt von dem vom Folienschlauch umgebenen Mediumrohr in den Corrugator geführt und im Corrugator geformt wird; und / oder
wobei insbesondere die Bildung der Wärmedämmung (3) im zuvor korrugierten Aussenmantel erfolgt.

13. Verbundmaterial (6) umfassend ein erstes Polymer (31) im direkten Kontakt mit einem zweiten Polymer (21), wobei
• besagtes erstes Polymer ein Schaumstoff ist, insbesondere ein geschlossenzelliger Schaumstoff wie in Anspruch 1 oder 3 definiert; und
• besagtes zweites Polymer ein thermoplastischer Kunststoff, wie in Anspruch 1 oder 2 definiert, ist; und
• die besagten Polymere (31) und (21) bevorzugt aus verschiedenen Monomeren bestehen.

14. Das Verbundmaterial nach Anspruch 13, wobei
• besagtes erstes Polymer (31) aus der Gruppe umfassend Polyurethane (PU) und Polyisocyanurate (PIR) ausgewählt ist; und / oder
• besagtes zweites Polymer (21) aus der Gruppe umfassend Polyethylene (PE) und Polypropylene (PP) ausgewählt ist.

15. Verbundmaterial (6) umfassend ein erstes Polymer (31) ein zweites Polymer (21) und eine dazwischen angeordnete Folie (5), wobei
• besagtes erstes Polymer ein Schaumstoff wie in Anspruch 1 oder 3 definiert (insbesondere ein geschlossenzelliger Schaumstoff), ist; und
• besagtes zweites Polymer ein thermoplastischer Kunststoff, wie in Anspruch 1 oder 2 definiert, ist; und
• besagte Folie wie in Anspruch 7 definiert ist; und
• die besagten Polymere (31) und (21) bevorzugt aus verschiedenen Monomeren bestehen; und
• besagte Folie mit dem ersten und dem zweiten Polymer einen Verbund bildet.

16. Verbundmaterial nach Anspruch 15, wobei
• besagtes erstes Polymer (31) aus der Gruppe umfassend PU und PIR ausgewählt ist; und / oder
• besagtes zweites Polymer (21) aus der Gruppe umfassend PE und PP ausgewählt ist; und
• besagte Folie (5) aus der Gruppe umfassend PET, Polyamid ausgewählt ist.

17. Verwendung eines Verbundmaterials nach einem der Ansprüche 13 - 16 zur Herstellung von:
• thermisch gedämmten Rohren;
• thermisch gedämmten Behältern; oder
• Isolationselementen, insbesondere von Muffen.

## Geänderte Patentansprüche

### Geänderte Patentansprüche gemäss Regel 137(2) EPÜ.

1. Thermisch gedämmtes Leitungsrohr (1), umfassend mindestens ein Mediumrohr (4), mindestens eine um das Mediumrohr herum angeordnete Wärmedämmung (3) und mindestens einen um die Wärmedämmung herum angeordneten Aussenmantel (2), **dadurch gekennzeichnet, dass**
besagte Wärmedämmung (3) einen Schaumstoff (31) umfasst welcher
• eine Dichte von 30-80kg/m3 gemäss ISO 845:2006, und
• eine Druckfestigkeit von 0.14-0.26 MPa gemäss ISO 844:2014 bei 10% Stauchung, und
• ein Modul von 14 - 23 MPa gemäss ISO 1926 aufweist; und
besagter Aussenmantel (2) einen thermoplastischen Kunststoff (21) umfasst, welcher
• eine Wellenform (22), insbesondere eine korrugierte Struktur, aufweist,
• ein Modul von 300-1400 MPa gemäss SN EN ISO 527-2/2012 aufweist, und
• ausgewählt ist aus der Gruppe umfassend LDPE und LLDPE.

2. Leitungsrohr gemäss Anspruch 1, **dadurch gekennzeichnet, dass** der Aussenmantel (2) eines oder mehrere der folgenden Kriterien erfüllt:
• der Kunststoff (21) umfasst ein Polymer aus der Gruppe LLDPE;
• Schmelzindex des Kunststoffs (21) ist 0.1 - 25 g/10 min, gemessen bei einer Last von 2.16 kg und einer Temperatur von 190 °C gemäss DIN EN ISO 1133/2012.

3. Leitungsrohr gemäss Anspruch 1, **dadurch gekennzeichnet, dass** die Wärmedämmung (3) eines oder mehrere der folgenden Kriterien erfüllt:
• der Schaumstoff (31) umfasst ein Polymer ausgewählt aus der Gruppe der Polyurethane (PU) und Polyisocyanurate (PIR);
• der Schaumstoff (31) ist zu mindestens 60% geschlossenzellig gemäss ISO 4590, Third Edition, 2016-07-15.
•

4. Leitungsrohr gemäss Anspruch 1, **dadurch gekennzeichnet, dass** das Mediumrohr (4) als ein einziges Rohrstück ausgebildet ist und ausgewählt ist aus der Gruppe umfassend:
• gewelltes oder glattes Kunststoffrohr ohne Metallbeschichtung;
• gewelltes oder glattes metallbeschichtetes Kunststoffrohr; oder
• gewelltes oder glattes Metallrohr;

5. Leitungsrohr gemäss Anspruch 1-4, **dadurch gekennzeichnet, dass**
• der Aussenmantel (2) einen Aussendurchmesser D aufweist und
• der Aussenmantel (2) eine korrugierte Wellenform, charakterisiert durch Wellenlänge W, Stegbreite B und Steghöhe H, aufweist,
wobei folgende Parameter erfüllt werden:
• D=40-70mm, W=4-40% von D, B=5-50% von D, H=3-25% von D; oder
• D=71-100mm, W=4-40% von D, B=4-50% von D, H=2-25% von D; oder
• D=101-130mm, W=3-40% von D, B=3-50% von D, H=1-25% von D; oder
• D=131-160mm, W=3-40% von D, B=2-50% von D, H=1-25% von D; oder
• D=161-250mm, W=2-40% von D, B=1-50% von D, H=1-25% von D.

6. Leitungsrohr gemäss Anspruch 1-5, **dadurch gekennzeichnet, dass**
• Mediumrohr (4) und Wärmedämmung (3) einen Verbund bilden; oder
• Aussenmantel (2) und Wärmedämmung (3) einen Verbund bilden; oder
• Aussenmantel (2) und Wärmedämmung (3) und Mediumrohr (4) einen Verbund bilden.

7. Leitungsrohr gemäss einem der Ansprüche 1-6, **dadurch gekennzeichnet, dass** es eine Ringsteifigkeit von mindestens 10 kN/m2, gemäss der SN EN ISO 9969, 2016-05 aufweist.

8. Leitungsrohr gemäss Anspruch 1-7, **dadurch gekennzeichnet, dass** zwischen Aussenmantel (2) und Wärmedämmung (3) eine Folie (5) angeordnet ist; wobei diese Folie bevorzugt eines oder mehrere der folgenden Kriterien erfüllt:
• die Folie (5) umfasst oder besteht aus einem Material ausgewählt aus der Gruppe PET, PE oder PA;
• die Folie (5) weist eine Gesamtdicke von 0.02-0.15 mm auf;
• die Folie (5) weist auf mindestens einer Seite eine Kaschierung auf;
• die Folie (5) weist auf mindestens einer Seite eine Oberflächenbehandlung auf.

9. Leitungsrohr gemäss Anspruch 8, **dadurch gekennzeichnet, dass**
• Folie (5) und Wärmedämmung (3) einen Verbund bilden; oder
• Folie (5) und Aussenmantel (2) einen Verbund bilden; oder
• Folie (5) und Aussenmantel (2) und Wärmedämmung (3) einen Verbund bilden; oder
• Folie (5) keinen Verbund mit Wärmedämmung (3) sowie keinen Verbund Aussenmantel (2) bildet.

10. Rohrverbundsystem umfassend thermisch gedämmte Rohre (1) nach einem der Ansprüche 1 bis 9.

11. Verwendung eines thermisch gedämmten Rohres nach einem der Ansprüche 1 bis 9
• zur Herstellung eines Rohrverbundsystems; oder
• zur Bereitstellung von Fernwärme, Nahwärme, oder Kühlung.

12. Verfahren zur Herstellung eines Leitungsrohres (1) nach Anspruch 8 oder 9 umfassend die Schritte:
(a) Bilden eines Folienschlauchs aus der Folie (5) um das mindestens eine Mediumrohr (4) und Einbringen des schaumbildenden Ausgangsmaterials für die Bildung des geschlossenzelligen Schaumstoffs (31) in den Folienschlauch
(b) Hindurchführen des Mediumrohrs (4) mit dem Folienschlauch durch einen Extruder, mittels welchem der Aussenmantel (2) ringförmig extrudiert wird, und
(c) Erzeugen der Wellenform des Aussenmantels (4) in einem Corrugator;
wobei insbesondere der Aussenmantel getrennt von dem vom Folienschlauch umgebenen Mediumrohr in den Corrugator geführt und im Corrugator geformt wird; und / oder
wobei insbesondere die Bildung der Wärmedämmung (3) im zuvor korrugierten Aussenmantel erfolgt.
